# EUROPEAN PATENT SPECIFICATION

(11) **EP 2 238 663 B1**
(45) Date of publication and mention of the grant of the patent: **16.11.2016**
(21) Application number: 07858157.6
(22) Date of filing: 27.12.2007
(51) Int. Cl.: H02G 3/08, H02G 9/10, H02G 9/02

(54) **DNO/IDNO LINK DISCONNECTING UNIT**
DNO/IDNO-LINK-TRENNEINHEIT
UNITÉ DE DÉCONNEXION DE LIAISON DNO/IDNO

(43) Date of publication of application: 13.10.2010
(73) Proprietor: Prysmian Cables & Systems Limited, Eastleigh Hampshire SO50 6YU (GB)
(72) Inventor: SPILLER, Darren Michael, Hampshire SO50 6YU (GB); COX, Stuart, Hampshire SO50 6YU (GB); RAWLINSON, Jonathan, Hampshire SO50 6YU (GB); JONES, Huw, Hampshire SO50 6YU (GB)
(74) Representative: Maccalli, Marco
(86) International application number: PCT/EP2007/064560
(87) International publication number: WO 2009/083026

(56) References cited:
- EP-A- 0 424 699
- DE-A1- 3 707 707
- DE-C- 535 380
- DE-C- 551 348
- US-A- 3 657 650
- US-A- 4 009 477
- US-A- 4 458 198
- US-A1- 2006 258 204

## Description

### Background of the invention

### Field of the invention

The present invention generally relates to the field of distribution of electricity by utilities. More specifically, the invention relates to the connection between DNO and IDNO networks.

### Background of the invention

Typically, the distribution of electricity by the utilities in each country is managed by one or more public electricity suppliers.

As a first step towards liberalization of the electricity distribution market, a number of licensed Distribution Network Operators (DNOs) have recently been created as an evolution from the public electricity supplier(s). Each DNO is responsible of providing electricity distribution services in a respective area of a given country and, within this area, the DNO has some license obligations.

As a further step towards market liberalization, Independent DNOs (IDNOs) have been allowed to install and operate independent electricity distribution networks.

IDNOs distribute electricity to their subscriber customers through distribution networks that are connected to a parent DNO's distribution network at a single or multiple connection points, which can be High Voltage (HV), Medium Voltage (MV) or Low Voltage (LV) connections.

For the purposes of the invention the term "low voltage" generally means a voltage lower than 1 kV, the term "medium voltage" generally means a voltage of between 1 kV and 35 kV, and the term "high voltage" generally means voltages higher than 35 kV.

In particular, in respect of LV connections the DNO is requested by the IDNO to provide a point of isolation between the DNO and IDNO networks, *i.e.* a device by which the DNO can switch off or switch on the electricity supply to the IDNO network, and also a device for measuring/metering the power consumption by the IDNO network.

Conventionally, a relatively bulky cabinet is provided at each DNO/IDNO LV connection point; the cabinet, which is typically installed outdoor, may be as large as 2.5 m by 2.0 m. This cabinet generally contains at one side a first cables' cut out and an electricity meter, which are owned by the DNO, and, at the other side, a second cables' cut out, owned by the IDNO.

Underground Link Disconnecting Boxes (ULDBs) are typically known in the art. A ULDB is a device, rather compact in size and designed to be placed underground, which is used to make LV cables joints incorporating a removable link that can be switched on or off so that different parts of an LV electricity distribution network can be selectively energized or de-energized when required. ULDBs are used to split LV networks into different network sections, particularly for the purposes of limiting the effects of faults on the customers and facilitating the faults' localization. In fact, when a fault occurs in an LV network section, the latter is detached from the remaining network sections by removing and/or disconnecting the link in the ULDB. A portable electricity generator may be attached in correspondence of the ULDB for providing a temporary supply of electricity, until the fault is repaired. ULDBs are disclosed, for instance, in documents EP 1323211 and EP 1681748.

### Summary of the invention

The Applicant has observed that the use of cabinets for DNO/IDNO LV connections points has several drawbacks.

The installation of the cabinets is burdensome: due to their bulkiness, substantial foundations works are needed to support the cabinet structure.

Furthermore, since the cabinets are installed outdoor, while the voltage mains cables of the DNO and IDNO networks usually run underground, it is necessary to divert the voltage mains cables from their path, to bring them up into the cabinet where the isolation points and the metering unit are accommodated, and at the exit from the cabinets the mains cables have to be re-routed underground.

All this substantially increases the costs to be sustained by DNOs and/or IDNOs for making connection points of the IDNO LV network to the DNO LV network.

An additional drawback related to the cabinets' large size is that it poses restrictions on their possible placement, and may often look unsightly.

The Applicant has faced the problem of providing a technical solution alternative to the conventional cabinets mentioned above so as to overcome the drawbacks thereof.

The Applicant has found that a solution to the problem outlined above is a compact unit adapted to be placed underground and which includes the elements necessary for realizing a disconnectable link between a DNO and an IDNO LV electricity distribution networks.

According to an aspect of the present invention, a link disconnecting unit for making a disconnectable link between a first electricity distribution network and a second electricity distribution according to claim 1 is provided.

The link disconnecting unit may further include an electricity meter connected to said device for deriving signals indicative of a power consumption of the second electricity distribution network, said electricity meter being housed within said receptacle.

In particular, said electricity meter measures the power consumption in respect of each voltage phase of the mains cable of the second electricity distribution network.

Said receptacle may further accommodate at least one connection block for connecting the electricity meter to signal wires carrying the signals indicative of the power consumption of the second electricity distribution network.

Said receptacle preferably also accommodates protection fuses for protecting a connection of respective voltage feed terminals of the electricity meter to the mains cable of the first electricity distribution network.

The link disconnecting unit may further comprise a number of second connection posts for receiving respective disconnectable link elements, said number of the second connection posts corresponding to the number of the voltage phases possessed by the mains cable of the first electricity distribution network, said second connection posts being housed within the receptacle.

In particular, the number of the first connection posts may be comprised between 1 and 4. The number of the second connection posts may also be comprised between 1 and 4.

Said disconnectable link elements may be circuit breakers.

The device for deriving signals indicative of the power consumption of the second electricity distribution network may be a current transformer.

The receptacle may further accommodate a link for a combined neutral/earth of the first electricity distribution network and a combined neutral/earth of the second electricity distribution network.

The link disconnecting unit is in particular adapted to the attachment of an IDNO network to a DNO network.

### Brief description of the drawings

These and other features and advantages of the present invention will be made clearer by the following detailed description of some embodiments thereof, provided merely by way of non-limitative examples. The description of the exemplary invention embodiments will be made in conjunction with the attached drawings, wherein:
**Figure 1** pictorially shows a scenario where a DNO/IDNO link disconnecting unit according to the present invention can be used;
**Figures 2A, 2B** and **2C** show, in isometric view, side view and bottom view, respectively, a DNO/IDNO link disconnecting unit according to an embodiment of the present invention;
**Figure 2D** shows the electrical schematic of the DNO/IDNO link disconnecting unit of **Figures 2A, 2B** and **2C****;**
**Figures 3A****,** **3B** and **3C** show, in isometric view, top view and bottom view, respectively, a DNO/IDNO link disconnecting unit according to another embodiment of the present invention;
**Figure 3D** shows the electrical schematic of the DNO/IDNO link disconnecting unit of **Figures 3A****,** **3B** and **3C****;**
**Figure 3E** shows, in isometric exploded view, the DNO/IDNO link disconnecting unit of **Figures 3A****,** **3B** and **3C****,** completed with top closure elements; and
**Figure 4** shows in isometric view a DNO/IDNO link disconnecting unit according to a further embodiment of the present invention.

### Detailed description of some embodiments of the invention

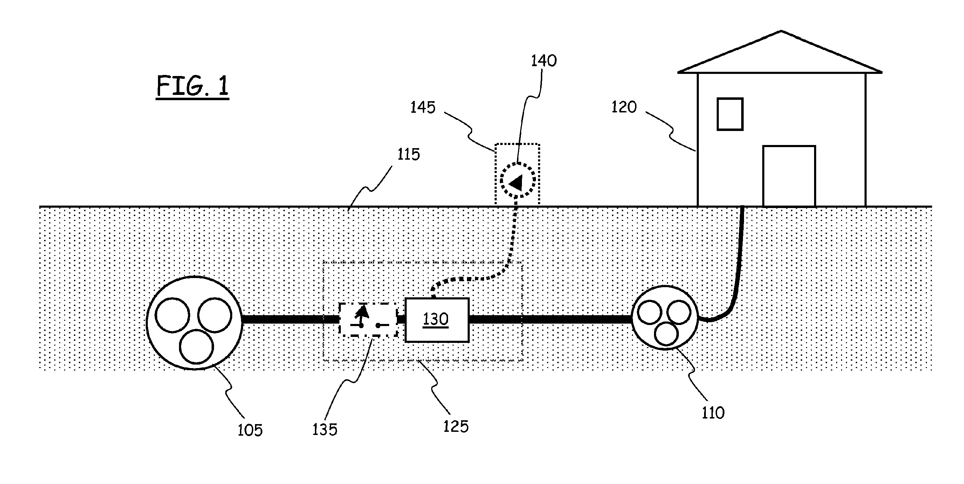

Making reference to the drawings, in **Figure 1** there is pictorially shown a scenario where a DNO/IDNO link disconnecting unit (in the following also indicated as disconnectable link unit) according to the present invention can be used. In the figure, reference numeral **105** denotes an electricity distribution network of a DNO, and reference numeral **110** denotes an electricity distribution network of an IDNO that has an agreement with the DNO. The DNO and IDNO electricity distribution networks **105** and **110** are in particular LV electricity distribution networks, and run under the ground level **115.** The IDNO network **110** delivers electricity to the premises **120** of customers having subscribed thereto.

The dashed rectangle **125** represents a DNO/IDNO networks LV connection point, *i.e.* a point at which the IDNO network **110** attaches to the DNO network **105.** As discussed in the introduction of the present description, the connection point **125** is a point of isolation between the DNO and IDNO networks, *i.e.* a point at which the DNO can switch off or on the electricity supply to the IDNO network **110,** and where means for measuring/metering the power consumption by the IDNO network **110** are provided. In particular, at the connection point **125** there are provided a first electricity mains cables' cut out and an electricity meter, which are owned by the DNO, and a second electricity mains cables' cut out, owned by the IDNO.

According to the present invention, the connection of the IDNO network **110** to the DNO network **105** at the connection point **125** is accomplished by means of an underground DNO/IDNO link disconnecting unit **130.** The link disconnecting unit **130** is placed underground, at a depth from the ground level **115** approximately corresponding to the depth at which the LV electric cables usually lie, typically about 450 mm.

As will be described in detail in the following, in some embodiments of the invention the underground link disconnecting unit **130** accomplishes the function of the second mains cables' cut out, and is provided with elements at least adapted to derive from the electricity distribution network signals useful for measuring the electric power consumption by the IDNO network **110.** In this case, the first mains cables' cut out may be accomplished by a ULDB, depicted in phantom in the figure and denoted **135,** and an electricity meter **140** (depicted in phantom in the figure) is provided external to the underground link disconnecting unit **130.** For instance, the electricity meter **140** can be located in a small cabinet or mini-pillar **145** located at the ground level **115.** The electricity meter **140** uses the signals derived by the underground link disconnecting unit **130** to measure the electric power consumption by the IDNO network **110.**

In other embodiments of the invention, the underground link disconnecting unit **130** includes, in addition to the second mains cables' cut out, an embedded electricity meter arranged to measure the electric power consumption by the IDNO network **110.** In this case, the first mains cables' cut out may be accomplished by a ULDB **135.**

According to further embodiments of the present invention, in addition to the second mains cables' cut out and the electricity meter, the underground link disconnecting unit **130** may also include the first cables' cut out.

Some of the different possible embodiments of the present invention will be now described in detail.

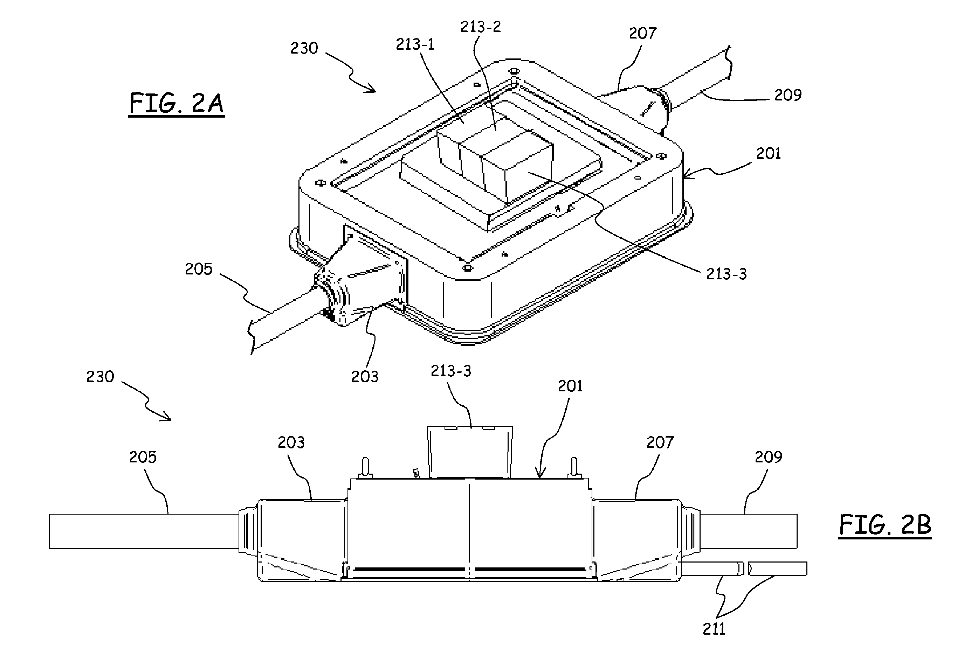

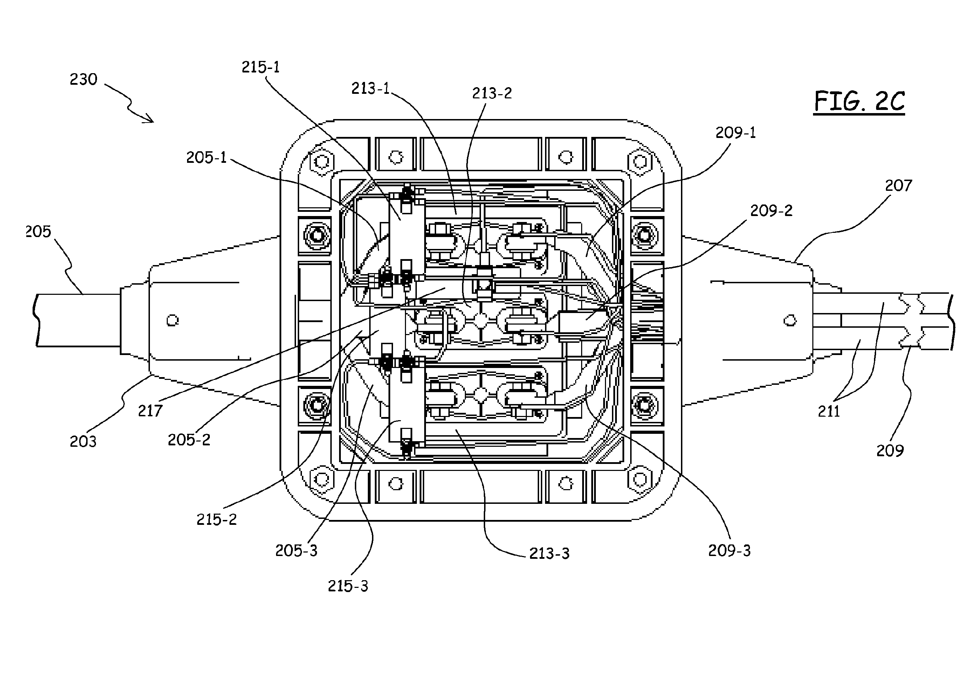

In **Figures 2A, 2B** and **2C** there is shown, in isometric view, side view and bottom view, respectively, a DNO/IDNO link disconnecting unit **230** according to an embodiment of the present invention.

The DNO/IDNO link disconnecting unit **230** includes a receptacle having the appearance of a generically rectangular, particularly square, box **201,** of compact size, for example approximately 405 mm x 405 mm. The box **201** has, on a first side, a first protecting sleeve **203** for the entrance of LV mains cable **205** of the DNO network **105,** and, on a second side, opposite to the first side, a second protecting sleeve **207** for the entrance of LV mains cable **209** of the IDNO network **110.** The LV mains cables **205** and **209** include each three electrical cables **205-1, 205-2, 205-3** and **209-1, 209-2, 209-3,** for the three voltage phases. Mains cables **205** and **209** with voltage phases different from three can be envisaged too. For instance, unipolar (one voltage phase being present), bipolar (two voltage phases being present) or quadripolar (four voltage phases being present) mains cables can be used. In correspondence of the second protecting sleeve **207,** signal cables **211** carrying signals to be routed to the external electricity meter **140** exit from the box **201.**

The box **201** accommodates disconnectable electrical link elements (not shown in the drawings), one for each voltage phase, for the connection/disconnection of the IDNO network **110** to/from the DNO network **105.** The electrical link elements may be circuit breakers. The electrical link elements are removably housed in three link chambers **213-1, 213-2, 213-3,** respectively, protruding from an upper side of the box **201.** Each link chamber **213-1, 213-2, 213-3** is provided with connection posts for receiving the link elements. In detail, a connection post for each of the three electrical cables **205-1, 205-2, 205-3** and a connection post for each of the three electrical cables **209-1, 209-2, 209-3** are provided, as visible in the bottom view of **Figure 2C** (in general, in the invention embodiment herein presented all electrical connections are made on the bottom side of the DNO/IDNO link disconnecting unit **230**)**.**

In correspondence to each connection post for the disconnectable electrical link elements, a respective current transformer **215-1, 215-2, 215-3** is provided, for deriving signals useful to an electricity meter like the external meter **140** in order to measure the electric power consumption. In particular, in **Figure 2C** the current transformers **215-1, 215-2, 215-3** are placed upstream of the connection posts for the disconnectable electrical link elements, and are magnetically coupled to the respective electrical cable **205-1, 205-2, 205-3.** Alternatively, the current transformers **215-1, 215-2, 215-3** may be placed downstream of the connection posts for the disconnectable electrical link elements, and may be magnetically coupled to the electrical cables **209-1, 209-2, 209-3.** The secondary coil windings of the current transformers **215-1, 215-2, 215-3** are connected to signal line wires of the signal cables **211.**

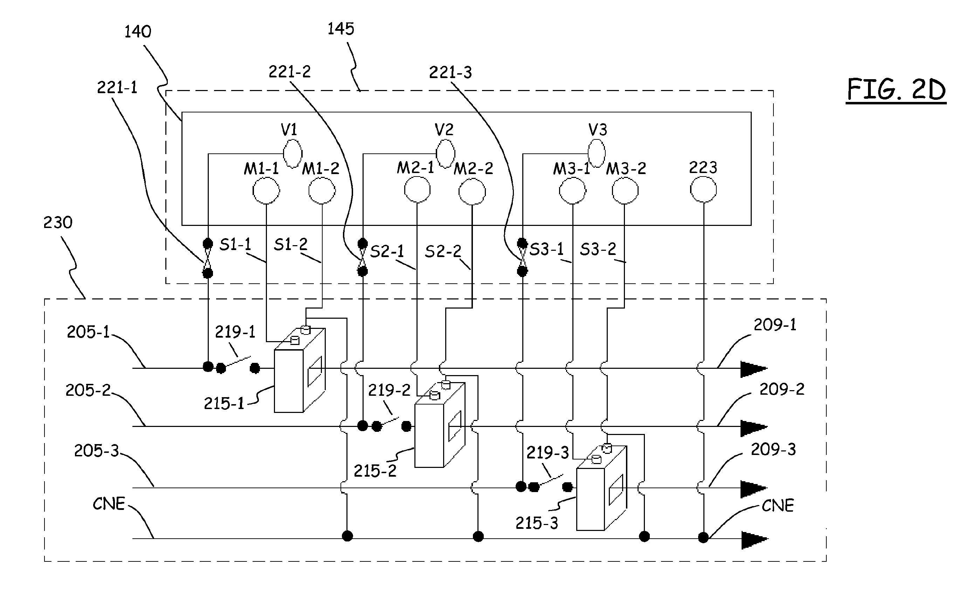

The electrical schematic of the DNO/IDNO link disconnecting unit **230** is depicted in **Figure 2D****.** In this drawing, electrical connections of the DNO/IDNO link disconnecting unit **230** to the external electricity meter **140** are also schematically shown. In the figure, the current transformers **215-1, 215-2, 215-3** are shown placed downstream of the connection posts for the disconnectable electrical link elements, and are magnetically coupled to the electrical cables **209-1, 209-2, 209-3.** The switch symbols denoted **219-1,219-2** and **219-3** indicate the disconnectable link brought about by the disconnectable link elements when housed in the link chamber **213-1, 213-2, 213-3.** Reference numeral **CNE** denotes a combined neutral/earth conductor, connected to a conductive screen provided around each of the electrical cables **205-1, 205-2, 205-3** and **209-1, 209-2, 209-3.** The conductive screens of the three electrical cables **205-1, 205-2, 205-3** are connected to the conductive screens of the three electrical cables **209-1, 209-2, 209-3** at a CNE connector **217** (shown in **Figure 2C**), for example made of brass, thereby ensuring the continuity of the combined neutral/earth through the DNO/IDNO link disconnecting unit **230.**

Electrical terminal pairs **S1-1** and **S1-2, S2-1** and **S2-2, S3-1** and **S3-2** of the secondary coil windings of the current transformers **215-1, 215-2, 215-3** are connected to respective pairs of input terminals **M1-1** and **M1-2, M2-1** and **M2-2, M3-1** and **M3-2** of the electricity meter **140,** each pair of input terminals **M1-1** and **M1-2, M2-1** and **M2-2, M3-1** and **M3-2** being associated with an electro-mechanical or electronic circuitry in the electricity meter **140** adapted to measure the electrical power consumption on a corresponding one of the three voltage phases. One **S1-2, S2-2** and **S3-2** of the terminals of the secondary coil windings of each current transformer **215-1, 215-2, 215-3** is, for safety purposes, electrically connected to the combined neutral/earth **CNE,** at the CNE connector 217. Voltage feed input terminals **V1, V2, V3** of the electricity meter **140** (one for each of the three phases) are connected through protection elements like fuses **221-1, 221-2, 221-3** to the respective electrical cable **205-1, 205-2, 205-3.** Earth input terminals of the electricity meter **140,** denoted globally as **223,** are connected to the combined neutral/earth **CNE.** Alternatively, the input terminals of the electricity meter **140** are connected to a separate external earth spike.

The top of the box **201** is preferably closed by a cover cap that is positioned at ground level. The cover cap may sit atop the box **201** on additional pit segments which are not shown in **Figures 2A, 2B** and **2C** for the sake of clarity. Additionally, a filling medium is preferably used to fill, seal and insulate the bottom of the box **201,** encapsulating the electrical cables cores.

In order to make a DNO/IDNO connection point, the DNO/IDNO link disconnecting unit **230** is placed underground, for example at a depth below the ground level corresponding to the depth at which the DNO network cable is buried. A disconnectable link **135** may be provided upstream of the DNO/IDNO link disconnecting unit **230,** for example a ULDB, and the signal cables **211** are routed towards the electricity meter **140,** which may be installed in a small outdoor cabinet or mini-pillar **145.**

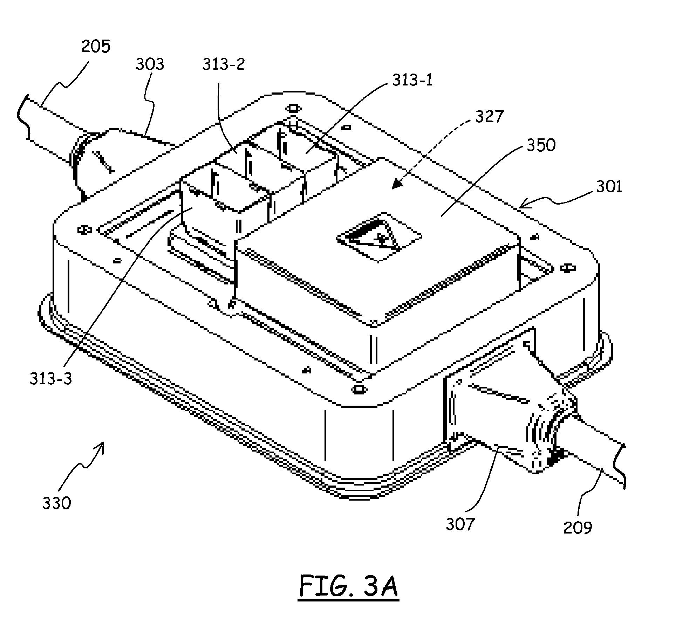

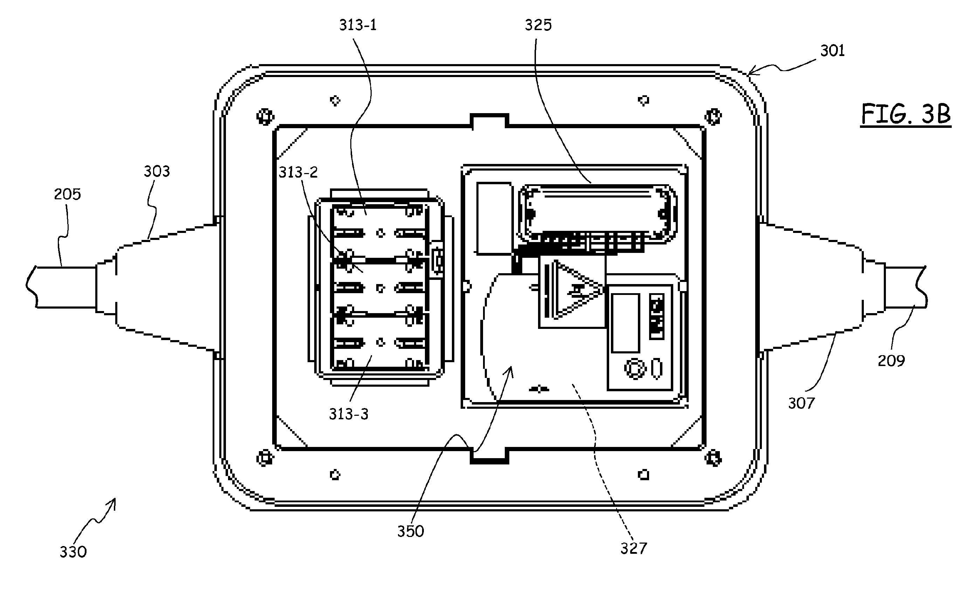

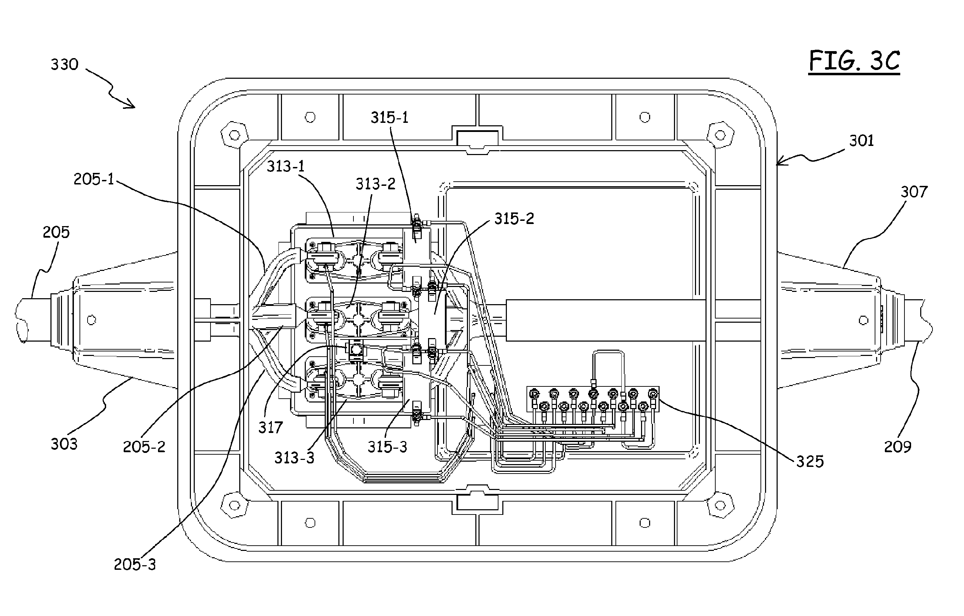

In **Figures 3A****,** **3B** and **3C** there is shown, in isometric view, top view and bottom view, respectively, a DNO/IDNO link disconnecting unit **330** according to a further embodiment of the present invention.

Similarly to the previously described embodiment, the DNO/IDNO link disconnecting unit **330** includes a receptacle having the appearance of a generically rectangular box **301,** still of compact size although slightly larger than the box **201,** in order to house an electricity meter, as described below. For example, the size of the box **301** may be approximately 750 mm x 620 mm (typically the internal dimensions are 600 mm x 450 mm).

The box **301** has, on a first side, a first protecting sleeve **303** for the entrance of LV mains cable **205** of the DNO network **105,** and, on a second side, opposite to the first side, a second protecting sleeve **307** for the entrance of LV mains cable **209** of the IDNO network **110.**

The box **301** accommodates, proximate to the side where the first protecting sleeve **303** is provided, disconnectable electrical link elements (not shown in the drawings), one for each voltage phase, for the connection/disconnection of the IDNO network **110** to/from the DNO network **105.** The electrical link elements may be circuit breakers. The electrical link elements are removably housed in three link chambers **313-1, 313-2, 313-3,** respectively, protruding from an upper side of the box **301.** Each link chamber **313-1, 313-2, 313-3** is provided with a connection post for linking, respectively, one of the three electrical cables **205-1, 205-2, 205-3** and with a connection post for linking, respectively, one of the three electrical cables **209-1, 209-2, 209-3.** Also according to this embodiment of the present invention, the electrical connections are made on the bottom side of the DNO/IDNO link disconnecting unit **330.**

In correspondence to each connection post for the disconnectable electrical link elements, a respective current transformer **315-1, 315-2, 315-3** is provided, for deriving signals useful to an electricity meter to measure the electric power consumption. In particular, in **Figure 3C** the current transformers **315-1, 315-2, 315-3** are placed downstream of the connection posts for the disconnectable electrical link elements, and are magnetically coupled to the respective electrical cable **209-1, 209-2, 209-3.** Alternatively, the current transformers **315-1, 315-2, 315-3** may be placed upstream of the connection posts for the disconnectable electrical link elements, and may be magnetically coupled to the electrical cables **205-1, 205-2, 205-3.**

The secondary coil windings of the current transformers **315-1, 315-2, 315-3** are connected to electric wire clamps of a connection block **325,** housed in the box **301.**

An electricity meter **327** is also accommodated in the box **301,** whose electric terminals are connected to electric wire clamps of the connection block **325.** In **Figure 3C** and in **Figure 3B** a water tight closure **350** is shown, said closure **350** containing inside thereof the electricity meter **327** and the connection block **325.**

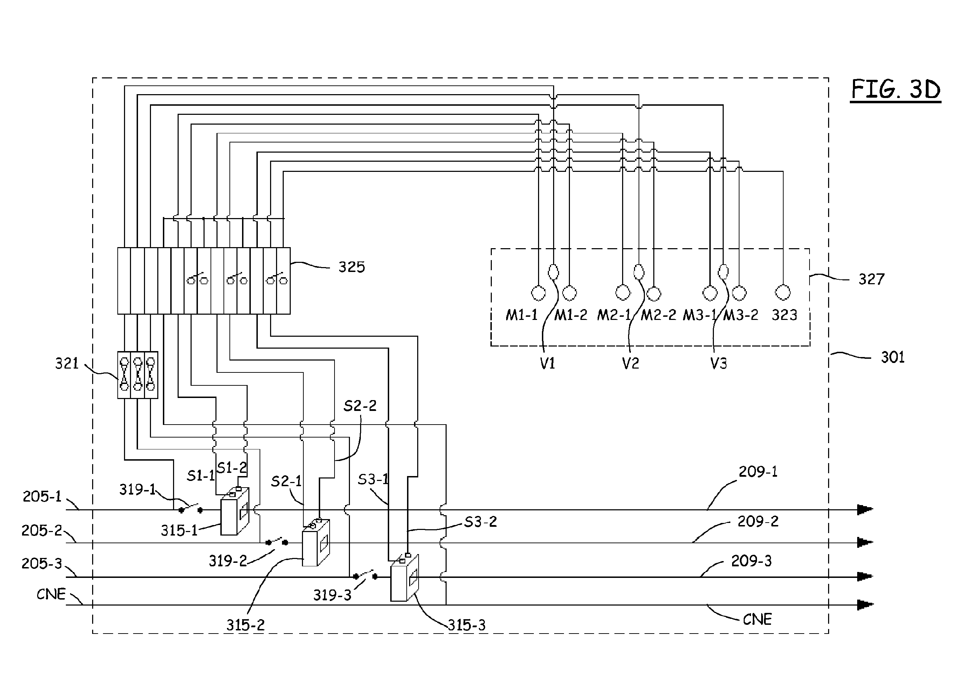

The electrical schematic of the DNO/IDNO link disconnecting unit **330** is depicted in **Figure 3D****.** In this drawing, electrical connections of the secondary coil windings of the current transformers **315-1, 315-2, 315-3** to the electricity meter **327** are also shown. In the figure, the switch symbols denoted **319-1, 319-2** and **319-3** indicate the disconnectable link brought about by the disconnectable link elements when housed in the link chamber **313-1, 313-2, 313-3.** The combined neutral/earth conductor **CNE** is connected to the conductive screen provided around each of the electrical cables **205-1, 205-2, 205-3** and **209-1, 209-2, 209-3.** The conductive screens of the three electrical cables **205-1, 205-2, 205-3** are connected to the conductive screens of the three electrical cables **209-1, 209-2, 209-3** at a CNE connector **317** (shown in **Figure 3C**), for example made of brass, thereby ensuring the continuity of the combined neutral/earth through the DNO/IDNO link disconnecting unit **330.**

Electrical terminal pairs **S1-1** and **S1-2, S2-1** and **S2-2, S3-1** and **S3-2** of the secondary coil windings of the current transformers **315-1, 315-2, 315-3** are connected to respective pairs of wire clamps of the connection block **325** to which input terminals **M1-1** and **M1-2, M2-1** and **M2-2, M3-1** and **M3-2** of the electricity meter **327** are also connected; each pair of input terminals **M1-1** and **M1-2, M2-1** and **M2-2, M3-1** and **M3-2** are associated with an electro-mechanical or electronic circuitry in the electricity meter **327** adapted to measure the electrical power consumption on a corresponding one of the three voltage phases. The combined neutral/earth **CNE** is connected to a respective wire clamp of the connection block **325.** For safety purposes, one **S1-2, S2-2** and **S3-2** of the terminals of the secondary coil windings of each current transformer **315-1, 315-2, 315-3** is electrically connected to the combined neutral/earth **CNE** by means of electrical bridges in the connection block **325.** Alternatively, one **S1-2, S2-2** and **S3-2** of the terminals of the secondary coil windings of each current transformer **315-1, 315-2, 315-3** may be electrically connected to a separate external earth spike. Voltage feed input terminals **V1, V2, V3** of the electricity meter **327** (one for each of the three phases) are connected to respective wire clamps of the connection block **325** which, through protection elements like fuses **321,** are connected to the respective electrical cable **205-1, 205-2, 205-3.** The protection elements **321** are contained within the water tight closure **350.** Earth input terminals of the electricity meter **327,** denoted globally as **323,** are connected to a wire clamp of the connection block which is electrically bridged to the wire clamp where the combined neutral/earth **CNE** is connected. Alternatively, the earth input terminals of the electricity meter **327** are connected to a separate external earth spike.

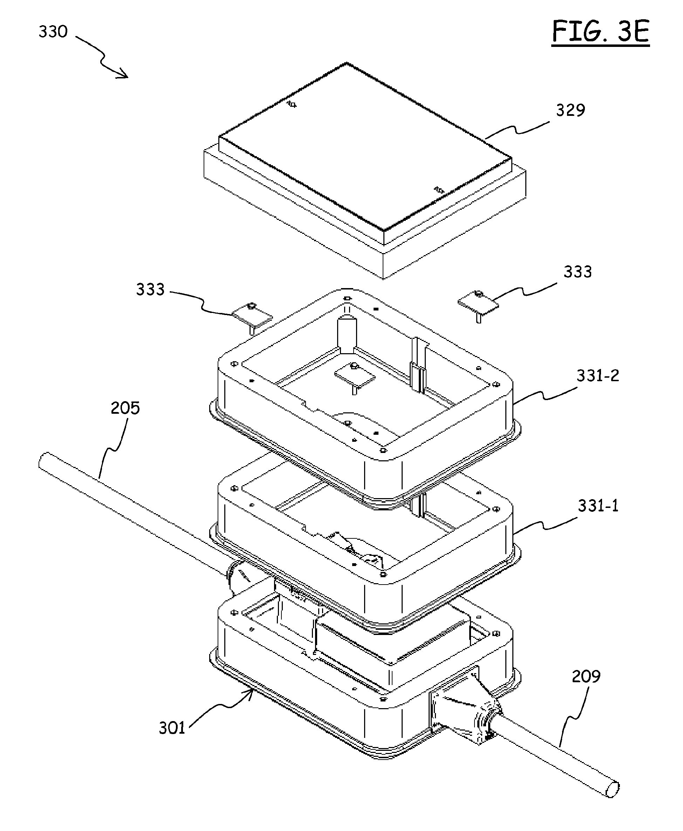

In **Figure 3E****,** the DNO/IDNO disconnectable link disconnecting unit **330** is shown in isometric exploded view, completed with additional build up pit segments and the top closure element. In particular, the top of the box **301** is preferably closed and sealed by a cover cap **329;** the cover cap **329** typically sits atop of one or more, particularly two in the example shown in the drawing, pit segments **331-1** and **331-2,** placed on the box **301.** The pit segments provide for an additional height so that the cover cap **329** can be brought to the ground level and is thus free from being buried, for easy access to the inner chamber. Preferably, height adjusters **333** are used in order to adjust the position of the cover cap **329** at the appropriate ground level. A filling medium is preferably used to fill, seal and insulate the bottom of the box **301,** thereby encapsulating the electrical cables cores and the current transformers. Preferably, the filling medium is a low density polyurethane resin. The filling medium provides for electrical insulation between the components located within the box **301** and, moreover, it provides for protection against water ingress as well as mechanical strength to the whole assembly during transport and under fault condition.

In order to make a DNO/IDNO connection point, the DNO/IDNO link disconnecting unit **330** is placed underground, for example at a depth below the ground level corresponding to the depth at which the DNO network cable is buried. A disconnectable link **135** is provided upstream of the DNO/IDNO link disconnecting unit **330,** for example a ULDB. Differently from the previous embodiment, no external electricity meter is needed since the latter is already integrated in the link disconnecting unit **330.**

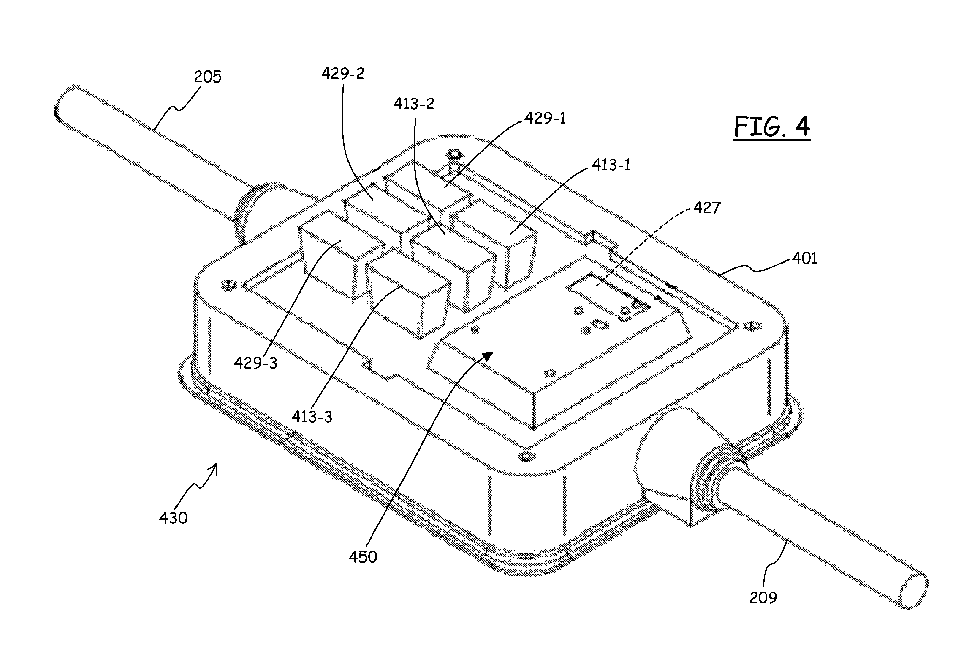

A DNO/IDNO link disconnecting unit according to a further embodiment of the present invention is shown in isometric view in **Figure 4****.** The DNO/IDNO link disconnecting unit, denoted **430,** includes a receptacle having the appearance of a box **401,** which, similarly to the DNO/IDNO link disconnecting unit **330,** houses three link chambers **413-1, 413-2, 413-3** provided with connection posts for three disconnectable link elements (not shown in the drawing) for realizing a disconnectable link of the IDNO network **110** to the DNO network **105,** particularly the disconnectable link owned by the IDNO and an electricity meter **427** for measuring the power consumption of the IDNO network **110. In** **Figure 4****,** as already described with reference to **Figure 3A** and **Figure 3B****,** a water tight closure **450** is shown which houses the electricity meter **427.** The Additionally, the box **401** houses three additional link chambers **429-1, 429-2, 429-3** provided with connection posts for three additional disconnectable link elements (not shown in the drawing), adapted to realize the disconnectable link owned by the DNO of the IDNO network **110** to the DNO network **105.** The additional link chambers **429-1, 429-2, 429-3** may be arranged upstream of the link chambers **413-1, 413-2, 413-3;** inside the link disconnecting unit **430,** electrical connections may be similar to those of the link disconnecting unit **330.**

In order to make a DNO/IDNO connection point, the DNO/IDNO link disconnecting unit **430** is placed underground, for example at a depth below the ground level corresponding to the depth at which the DNO network cable is buried.

The use of the DNO/IDNO link disconnecting unit according to the present invention allows avoiding the need of installing large cabinets outdoor, above the ground level; most or even all of the elements needed for a DNO/IDNO connection point may be located underground, for example in correspondence of the footpath or aside the roadways, thereby considerably reducing the, installation costs thereof.

The present invention has been here described presenting some possible embodiments thereof. Several modifications to the described embodiments are possible, as well as other embodiments of the invention, without departing from the scope of protection defined in the appended claims.

For example, the DNO/IDNO disconnectable link disconnecting unit might include the first mains cables' cut out, the second mains cables' cut out, and means (e.g., CTs) for deriving signals to be exploited by an external electricity meter for measuring the electric power consumption by the IDNO network.

## Claims

1. A link disconnecting unit adapted to be placed underground **(130,230, 330,430)** for making a disconnectable link between
a first electricity distribution network **(105)** and a second electricity distribution network **(110),** the link disconnecting unit comprising a receptacle **(201; 301; 401)**
provided with an entrance **(203; 303)** for inserting a mains cable **(205)** of the first electricity distribution network and with an entrance **(207)** for inserting a mains cable **(209)** of the second electricity distribution network, the receptacle housing comprises:
- a number of first connection posts for receiving respective disconnectable link elements for the connection/disconnection of the second electricity distribution network to/from the first electricity distribution network so as to switch on or off the electricity supply to the second electricity distribution network, said number of the first connection posts corresponding to the number of the voltage phases possessed by the mains cable (205;**209**) of the first and second electricity distribution networks, and
- a device **(215-1, 215-2, 215-3; 315-1, 315-2, 315-3)** for deriving signals indicative of a power consumption of the second electricity distribution network, said device being associated with a respective first connection post,
and wherein each of the disconnectable link elements which are receivable in the first connection posts is connetable to one voltage phase of the first electricity distribution network and to one voltage phase of the second electricity distribution network.

2. The link disconnecting unit according to claim 1, further including an electricity meter **(327; 427)** connected to said device for deriving signals indicative of a power consumption of the second electricity distribution network, said electricity meter being housed within said receptacle.

3. The link disconnecting unit according to claim 2, wherein said electricity meter measures the power consumption in respect of each voltage phase of the mains cable **(209)** of the second electricity distribution network.

4. The link disconnecting unit according to claim 2 or 3, wherein said receptacle further accommodates at least one connection block **(325)** for connecting the electricity meter to signal wires carrying the signals indicative of the power consumption of the second electricity distribution network.

5. The link disconnecting unit according to any one of claims 2, 3 or 4, wherein said receptacle further accommodates protection fuses **(321)** for protecting a connection of respective voltage feed terminals **(V1,V2,V3)** of the electricity meter to the mains cable of the first electricity distribution network.

6. The link disconnecting unit according to any one of the preceding claims, further comprising a number of second connection posts for receiving respective disconnectable link elements, said number of the second connection posts corresponding to the number of the voltage phases possessed by the mains cable **(205)** of the first electricity distribution network, said second connection posts being housed within the receptacle.

7. The link disconnecting unit according to any one of the preceding claims, wherein the number of the first connection posts is comprised between 1 and 4.

8. The link disconnecting unit according to claim 6 or 7, wherein the number of the second connection posts is comprised between 1 and 4.

9. The link disconnecting unit according to any one of the preceding claims, wherein said disconnectable link elements are circuit breakers.

10. The link disconnecting unit according to any one of the preceding claims, wherein the device for deriving signals indicative of the power consumption of the second electricity distribution network is a current transformer.

11. The link disconnecting unit according to any one of the preceding claims, wherein the receptacle further accommodates a link for a combined neutral/earth (CNE) of the first electricity distribution network and a combined neutral/earth of the second electricity distribution network.

12. The link disconnecting unit according to any one of the preceding claims, wherein the first electricity distribution network is a network of a Distribution Network Operator (DNO).

13. The link disconnecting unit according to any one of the preceding claims, wherein the second electricity distribution network is a network of an Independent Distribution Network Operator (IDNO).

## Patentansprüche

1. Verbindungs-Trenneinheit (130, 230, 330, 430), die ausgebildet ist für eine Platzierung unter der Erde, um eine trennbare Verbindung zwischen einem ersten Stromverteilnetz (105) und einem zweiten Stromverteilnetz (110) herzustellen, wobei die Verbindungs-Trenneinheit ein Gehäuse (201; 301; 401) mit einer Öffnung (203; 303) zum Einstecken eines Netzkabels (205) des ersten Stromverteilnetzes und einer Öffnung (207) zum Einstecken eines Netzkabels (209) des zweiten Stromverteilnetzes umfasst, wobei das Gehäuse weiterhin umfasst:
- eine Anzahl von ersten Verbindungsstangen zum Aufnehmen von entsprechenden trennbaren Verbindungselementen für das Verbinden/Trennen des zweiten Stromverteilnetzes mit/von dem ersten Stromverteilnetz, um die Stromversorgung zu dem zweiten Stromverteilnetz ein- oder auszuschalten, wobei die Anzahl der ersten Verbindungsstangen der Anzahl von Spannungsphasen des Netzkabels (205; 209) der ersten und zweiten Stromverteilnetze entspricht, und
- eine Einrichtung (215-1, 215-2, 215-3; 315-1, 315-2, 315-3) zum Ableiten von Signalen, die den Stromverbrauch des zweiten Stromverteilnetzes angeben, wobei die Einrichtung mit einer entsprechenden ersten Verbindungsstange assoziiert ist,
und wobei jedes der trennbaren Verbindungselemente, die in den ersten Verbindungsstangen aufgenommen werden können, mit einer Spannungsphase des ersten Stromverteilnetzes und mit einer Spannungsphase des zweiten Stromverteilnetzes verbunden werden kann.

2. Verbindungs-Trenneinheit nach Anspruch 1, die weiterhin einen Strommesser (327; 427) enthält, der mit der Einrichtung zum Ableiten von Signalen, die den Stromverbrauch des zweiten Stromnetzwerks angeben, verbunden ist, wobei der Strommesser in dem Gehäuse aufgenommen ist.

3. Verbindungs-Trenneinheit nach Anspruch 2, wobei der Strommesser den Stromverbrauch in Bezug auf jede Spannungsphase des Netzkabels (209) des zweiten Stromverteilnetzes misst.

4. Verbindungs-Trenneinheit nach Anspruch 2 oder 3, wobei das Gehäuse weiterhin wenigstens einen Verbindungsblock (325) für das Verbinden des Strommessers mit Signaldrähten zum Tragen von Signalen, die den Stromverbrauch des zweiten Stromverteilnetzes angeben, aufnimmt.

5. Verbindungs-Trenneinheit nach einem der Ansprüche 2, 3 oder 4, wobei das Gehäuse weiterhin Schutzsicherungen (321) für das Schützen einer Verbindung von entsprechenden Spannungszuführanschlüssen (V1, V2, V3) des Strommessers mit dem Netzkabel des ersten Stromverteilnetzes aufnimmt.

6. Verbindungs-Trenneinheit nach einem der vorstehenden Ansprüche, die weiterhin eine Anzahl von zweiten Verbindungsstangen für das Aufnehmen von entsprechenden trennbaren Verbindungselementen umfasst, wobei die Anzahl der zweiten Verbindungsstangen der Anzahl der Spannungsphasen des Netzkabels (205) des ersten Stromverteilnetzes entspricht, wobei die zweiten Verbindungsstangen in dem Gehäuse aufgenommen sind.

7. Verbindungs-Trenneinheit nach einem der vorstehenden Ansprüche, wobei die Anzahl der ersten Verbindungsstangen zwischen 1 und 4 beträgt.

8. Verbindungs-Trenneinheit nach Anspruch 6 oder 7, wobei die Anzahl der zweiten Verbindungsstangen zwischen 1 und 4 beträgt.

9. Verbindungs-Trenneinheit nach einem der vorstehenden Ansprüche, wobei die trennbaren Verbindungselemente Stromkreisunterbrecher sind.

10. Verbindungs-Trenneinheit nach einem der vorstehenden Ansprüche, wobei die Einrichtung zum Ableiten von Signalen, die den Stromverbrauch des zweiten Stromverteilnetzes angeben, ein Stromwandler ist.

11. Verbindungs-Trenneinheit nach einem der vorstehenden Ansprüche, wobei das Gehäuse weiterhin eine Verbindung für eine Neutral/Erde-Kombination des ersten Stromverteilnetzes und für eine Neutral/Erde-Kombination des zweiten Stromverteilnetzes aufnimmt.

12. Verbindungs-Trenneinheit nach einem der vorstehenden Ansprüche, wobei das erste Stromverteilnetz ein Netz eines Verteilnetzbetreibers ist.

13. Verbindungs-Trenneinheit nach einem der vorstehenden Ansprüche, wobei das zweite Stromverteilnetz ein Netz eines unabhängigen Verteilnetzbetreibers ist.

## Revendications

1. Unité de déconnexion de liaison adaptée pour être placée sous terre (130, 230, 330, 430) pour réaliser une liaison déconnectable entre un premier réseau de distribution d'électricité (105) et un deuxième réseau de distribution d'électricité (110), l'unité de déconnexion de liaison comprenant un réceptacle (201 ; 301 ; 401) pourvu d'une entrée (203 ; 303) pour insérer un câble de réseau (205) du premier réseau de distribution d'électricité et d'une entrée (207) pour insérer un câble de réseau (209) du deuxième réseau de distribution d'électricité, le boîtier formant réceptacle comprenant :
- un nombre de premiers postes de connexion pour recevoir des éléments de liaison déconnectables respectifs pour la connexion/déconnexion du deuxième réseau de distribution d'électricité au/du premier réseau de distribution d'électricité de manière à activer ou désactiver l'alimentation d'électricité vers le deuxième réseau de distribution d'électricité, ledit nombre de premiers postes de connexion correspondant au nombre de phases de tension que comporte le câble de réseau (205 ; 209) des premier et deuxième réseaux de distribution d'électricité, et
- un dispositif (215-1, 215-2, 215-3 ; 315-1, 315-2, 315-3) pour obtenir des signaux indicatifs d'une consommation de puissance du deuxième réseau de distribution d'électricité, ledit dispositif étant associé à un premier poste de connexion respectif,
et dans lequel chacun des éléments de liaison déconnectables pouvant être reçus dans les premiers postes de connexion est connectable à une phase de tension du premier réseau de distribution d'électricité et à une phase de tension du deuxième réseau de distribution d'électricité.

2. Unité de déconnexion de liaison selon la revendication 1, comprenant en outre un compteur d'électricité (327 ; 427) connecté audit dispositif pour obtenir des signaux indicatifs d'une consommation de puissance du deuxième réseau de distribution d'électricité, ledit compteur d'électricité étant logé à l'intérieur dudit réceptacle.

3. Unité de déconnexion de liaison selon la revendication 2, dans laquelle ledit compteur d'électricité mesure la consommation de puissance par rapport à chaque phase de tension du câble de réseau (209) du deuxième réseau de distribution d'électricité.

4. Unité de déconnexion de liaison selon la revendication 2 ou 3, dans laquelle ledit réceptacle loge en outre au moins un bloc de connexion (325) pour la connexion du compteur d'électricité aux câbles de signal portant les signaux indicatifs de la consommation de puissance du deuxième réseau de distribution d'électricité.

5. Unité de déconnexion de liaison selon l'une quelconque des revendications 2, 3 ou 4, dans laquelle ledit réceptacle loge en outre des fusibles de protection (321) pour protéger une connexion de bornes d'alimentation de tension respectives (V1, V2, V3) du compteur d'électricité au câble de réseau du premier réseau de distribution d'électricité.

6. Unité de déconnexion de liaison selon l'une quelconque des revendications précédentes, comprenant en outre un nombre de deuxièmes postes de connexion pour recevoir des éléments de liaison déconnectables respectifs, ledit nombre de deuxièmes postes de connexion correspondant au nombre de phases de tension que comporte le câble de réseau (205) du premier réseau de distribution d'électricité, lesdits deuxièmes postes de connexion étant logés à l'intérieur du réceptacle.

7. Unité de déconnexion de liaison selon l'une quelconque des revendications précédentes, dans laquelle le nombre de premiers postes de connexion est compris entre 1 et 4.

8. Unité de déconnexion de liaison selon la revendication 6 ou 7, dans laquelle le nombre de deuxièmes postes de connexion est compris entre 1 et 4.

9. Unité de déconnexion de liaison selon l'une quelconque des revendications précédentes, dans laquelle lesdits éléments de liaison déconnectables sont des disjoncteurs.

10. Unité de déconnexion de liaison selon l'une quelconque des revendications précédentes, dans laquelle le dispositif pour obtenir des signaux indicatifs de la consommation de puissance du deuxième réseau de distribution d'électricité est un transformateur de courant.

11. Unité de déconnexion de liaison selon l'une quelconque des revendications précédentes, dans laquelle le réceptacle loge en outre une liaison pour un neutre/terre combiné (CNE) du premier réseau de distribution d'électricité et un neutre/terre combiné du deuxième réseau de distribution d'électricité.

12. Unité de déconnexion de liaison selon l'une quelconque des revendications précédentes, dans laquelle le premier réseau de distribution d'électricité est un réseau d'un opérateur de réseau de distribution (DNO).

13. Unité de déconnexion de liaison selon l'une quelconque des revendications précédentes, dans laquelle le deuxième réseau de distribution d'électricité est un réseau d'un opérateur de réseau de distribution indépendant (IDNO).
